(19) Europäisches Patentamt
European Patent Office
Office européen des brevets

(11) Publication number: **0 475 142 A2**

# (12) EUROPEAN PATENT APPLICATION

(21) Application number: **91114046.5**

(22) Date of filing: **22.08.91**

(51) Int. Cl.[5]: **C08G 81/02**, C08K 5/09, C08L 67/02, //(C08L67/02,35:06)

(30) Priority: **05.09.90 GB 9019384**

(43) Date of publication of application: **18.03.92 Bulletin 92/12**

(84) Designated Contracting States: **AT BE CH DE DK ES FR GR IT LI LU NL SE**

(71) Applicant: **Smith, Harold Verity**
**24, rue des Peupliers**
**CH-1205 Genève(CH)**
Applicant: **Trevitt, Edwin William**
**Vine Court, Portsmouth Road**
**Milford, Godalming, Surrey GU8 5HJ(GB)**

(72) Inventor: **Smith, Harold Verity**
**24, rue des Peupliers**
**CH-1205 Genève(CH)**
Inventor: **Trevitt, Edwin William**
**Vine Court, Portsmouth Road**
**Milford, Godalming, Surrey GU8 5HJ(GB)**

(74) Representative: **Micheli & Cie**
**Rue de Genève 122, Case Postale 61**
**CH-1226 Genève-Thonex(CH)**

## (54) Moulding composition of polyethylene terephthalate reacted with a copolymer of maleic anhydride.

(57) This invention relates to polyethylene terephtalate compositions comprising a reaction product of a PET resin and 0.05 to 5.0 WT % of a copolymer of maleic anhydride, optionally together with pyromellitic dianhydride.

These compositions have improved melt strengths, which allow to apply them especially for extrusion blow-moulding and foam extrusion.

EP 0 475 142 A2

This invention relates to compositions of polyethylene terephthalate (PET), to methods of using thereof and to finished products therefrom.

PET is normally manufactured by reacting ethylene glycol with terephthalic acid or with dimethyl terephthalate. Alternatively, copolymers may be made, for example by substituting a proportion of the terephthalic acid by isophthalic acid. The polymers and copolymers so manufactured have an intrinsic viscosity of about 0.6 dl/g, and are widely used for the manufacture of synthetic fibres, e.g. "Terylene", "Trevira", "Dacron", etc.

It is commonly considered that these polymers have too low an intrinsic viscosity to be suitable for processing by the normal methods of thermoplastics technology. In fact, the measurement of intrinsic viscosity, which is normally performed in very dilute solution at 23°C gives no effective information about the behaviour of the material when it is processed at normal working temperatures. For the production of plastic products, the fibre grade or "PET base resin" is subjected to a relatively expensive process known in the trade as "solid stating", which involves a counter flow of hot nitrogen or nitrogen/hydrogen mixture up a packed tower down which PET is falling at a temperature just below the point of fusion, with the use of catalysts.

In this way, for example, a resin of intrinsic viscosity of 0.78 dl/g can be made, which is suitable for extrusion film casting. A resin of intrinsic viscosity of 0.85 dl/g can also be made, a grade which is suitable for the manufacture of bottles by injection moulding the parisons and then stretch blow-moulding the parisons so as to produce biaxially oriented bottles.

However, it has been found that even at these higher viscosities, the melt strength of the polymer tends to be too low to retain the bubbles in foam extrusion at the relatively high temperatures needed to extrude the foam, and too low to prevent parisons breaking under their own weight in extrusion blow moulding.

Previous, but unsuccessful attempts, have been made to solve this problem. Mention must be made of US Patent 4.145.466, in which it is stated that reaction with dianhydrides, particularly pyromellitic dianhydride, is effective in raising the intrinsic viscosity.

While it is true that reaction with pyromellitic dianhydride will raise the viscosity, the method quoted in the cited patent will not be efficient. In example 1 of this patent, the PET used has a moisture content of 0.02% and 0.3% of pyromellitic dianhydride (PMDA) compounded into it at 260-270°C. At this temperature and with this water content, hydrolysis of the polymer would largely counteract the theoretical increase in viscosity. Theoretically, 0.3% of PMDA would double the molecular weight of the PET and result in an intrinsic viscosity of 1.1, whereas an effective viscosity of 0.86 dl/g is reported. The reaction of PMDA with the terminal hydroxy groups of PET produces a substituted phthalic acid, in which the substituents are two PET chains predominantly in the p- positions, each with an adjacent unreacted carbonyl group, a very few of which may esterify. Such a structure has more than double the molecular weight of the original PET molecules, and will have a greatly increased viscosity, but, being an essentially linear polymer, it will have a very steep temperature/viscosity curve.

Such polymers are said to be lacking in melt strength and are unsuitable for the production of extruded foams or the production of bottles by extrusion blow-moulding, for example.

Thus, the fact of raising the viscosity of PET by reacting it with PMDA is not sufficient to ensure an adequate melt strength in the polymer for such applications as extrusion blow-moulding and foam extrusion. For these applications, it is necessary to introduce a degree of chain branching and, possibly, cross-linking into the system, which extends the melting range, thus making the temperature control during subsequent processing less critical.

Consequently, the purpose of the present invention is to provide PET compositions which are appropriate to be used for example for the production of extruded foams, tubular films or foils, as well as a process of production of such compositions, which should have a clearly improved melt strength.

The present inventors have surprisingly found that this can be done by the reaction of the PET with copolymers of maleic anhydride. This is directly contrary to the statement in U.S. Patent 4,145,466, which states that maleic anhydride copolymers do not function in this way.

The object of this invention, as previously explained, is achieved by means of a polyethylene terphtalate composition comprising a reaction product of a PET resin and 0.05 to 5.0 weight % of a copolymer of maleic anhydride.

Preferably, the weight % of the copolymer is in the range of 0.1 to 0.5, and the copolymer is a copolymer of maleic anhydride with styrene having a molecular weight between 500 and 500.000. Such polymers may or may not be partially esterified, as, for example with methanol.

Copolymers of the following type :

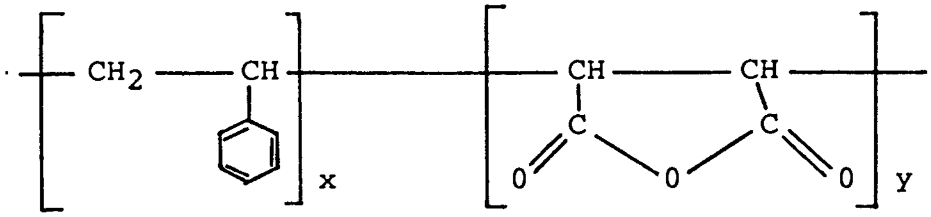

where x = 1 to 3 and y = 6 to 8 are highly effective.

It has also been found that a similar copolymer, with a much higher molecular weight, and with about 18% of the maleic anhydride groups esterified with methanol, is also very effective.

The PET used as base resin of the composition according to the invention has usually an intrinsic viscosity of 0.55 to 0.65 dl/g. It is also possible to use solid-stated PET having an intrinsic viscosity of more than 0.6 dl/g, or waste PET, such as may be derived from manufacturing operations, or from post-user waste, for example in the form of films, sheets, fibres, bottles, mouldings, etc.

Of course other known additives may be added in the PET composition according to the invention, such as for example pyromellitic dianhydride (PMDA).

Another object of the invention is a method of using the PET composition according to the invention, in which the mixture of PET base resin with 0.05 to 5.0 weight % of a copolymer of maleic anhydride is reacted at a temperature preferably between 200 and 320 ° C.

Both the PET base resin and the copolymer can be of the types described above. Of course, other additives, such as PMDA, can also be reacted together with the PET base resin and the copolymer.

The above-mentioned reaction is preferably performed in an extruder, for example in order to obtain films by extrusion casting, blow mouldings by injected-parison stretch blow-moulding, extrusion blow-mouldings, tubular films or foamed articles by extrusion.

The present invention will be now described in more details, with reference to the following Example.

EXAMPLE

A PET base resin of the type "FR 295537" (from Cobarr) with an intrinsic viscosity of 0.658 dl/g was first dried in a "Conair-Churchill DO6H" drier for four hours at 180 ° C to reach a water content not greater than 0.005 %.

Samples of the dried resin were then mixed for 20 minutes with the appropriate additives (as mentioned in the following Table) in a stainless steel tumbler mixer, and each mixture was fed to a twin-screw extruder of the type "L.M.P. RC2L" with the following temperature settings : feed 288 ° C, barrel 282-283 ° C, flange 278 ° C, head 282 ° C and die 282 ° C.

The material thus obtained was extruded through a 4 mm die into a continuous rod, which was then allowed to cool and granulated to pass a 5 mm screen. Finally, the intrinsic viscosity of each sample was measured and reported in the next page Table. Furthermore, since no suitable method of measuring the melt strength has yet been found, it was thus necessary to rely upon empirical observations in blow moulding and foam extrusion trials to estimate said melt strength.

It appears from the results of these observations that Compositions 1 to 5 exhibit clearly increased melt strength as compared with the base resin.

Compositions 4 and 5 also exhibit increased intrinsic viscosity as compared with the base resin, while in Compositions 1 to 3 the intrinsic viscosity is lower than that of the base resin.

Reference compositions 6 and 7 however show increased intrinsic viscosity, but almost no change in melt strength.

As to the application of the compositions according to the invention, by using for example composition 5, it was possible to reduce the extrusion temperature to 220 ° C (at the die), and by adding 3 % of a nucleating agent comprising a 40 % dispersion of talc in polystyrene it was pos

TABLE

| Sample | Additives (*) | (Wt. %) | Intrinsic viscosity (dl/g) |
|---|---|---|---|
| 1 | SMA 1000 | (0.4) | 0.536 |
| 2 | SMA 1000 + PMDA | (0.2+0.2) | 0.567 |
| 3 | SCRIPSET 520 | (0.4) | 0.536 |
| 4 | SCRIPSET 520 + PMDA | (0.2+0.2) | 1.005 |
| 5 | SCRIPSET 520 + PMDA | (0.4+0.2) | 1.450 |
| 6 (ref.) | PMDA | (0.2) | 0.713 |
| 7 (ref.) | PMDA | (0.4) | 0.828 |

(*) - PMDA = pyromellitic dianhydride

- "SMA 1000" is a commercially available (from ATO-CHEM) non-esterified styrene-maleic anhydride copolymer, with a molecular weight of about 1600
- "SCRIPSET 520" is a commercially available (from MONSANTO) styrene-maleic anhydride copolymer, with 18 % of the maleic anhydride esterified with methanol, and with a molecular weight of about 350,000

sible to blow stable foams, using Freon 12 as the blowing agent.

Furthermore, using composition 4, it was possible to blow bottles on a standard "Automa" extrusion blow-moulding machine at about 250 ° C.

Consequently, it has been stated that the melt strength of the compositions according to the invention was so improved, for example with regards to the reaction products of PET and PMDA, that they become well appropriate for applications which were not possible with said reaction products such as foam extrusion and extrusion blow-moulding.

A further advantageous aspect of the invention is the possibility of making articles in a single operation, the chemical modification of the PET being effected directly in an extruder or a blow moulding machine, the PET resin being mixed with the anhydride in said extruder or blow moulding machine. Alternatively, the reactants may be fed through a port in the cylinder of the extrusion machine.

## Claims

1. Polyethylene terephthalate (PET) composition comprising a reaction product of a PET resin and 0.05 to 5.0 wt% of a copolymer of maleic anhydride.

2. PET composition according to claim 1, which comprises preferably 0.1 to 0.5 wt% of the copolymer.

3. PET composition according to claim 1 or claim 2, in which the copolymer is a styrene-maleic anhydride copolymer having a molecular weight between 500 and 500.000.

4. PET composition according to one of the claims 1 to 3, in which the maleic anhydride is partially esterified, for example with methanol.

5. PET composition according to claim 4, in which about 18% of the maleic anhydride groups are esterified with methanol.

6. PET composition according to one of the claims 1 to 5, in which the PET resin is a PET base resin with an intrinsic viscosity of 0.55 to 0.65 dl/g.

7. PET composition according to one of the claims 1 to 5, in which the PET resin is a solid-stated PET with an intrinsic viscosity higher than 0.6 dl/g.

8. PET composition according to one of the claims 1 to 5, in which the PET resin is waste PET.

9. PET composition according to one of the claims 1 to 8, which further comprises additives to increase the viscosity, such as pyromellitic dianhydride (PMDA).

10. PET composition according to claim 9, which comprises 0.05 to 0.5 wt% of PMDA.

11. Method of using the composition according to one of claims 1 to 10, in which the mixture of PET resin with 0.05 to 5.0 wt% of a copolymer of maleic anhydride is reacted at a temperature preferably between 200 and 320 °C.

12. Method according to claim 11, in which the PET composition is being worked by extrusion casting to produce film.

13. Extruded films produced according to the method of claim 12.

14. Method according to claim 11, in which the PET composition is being worked by injected-parison stretch blow-moulding to produce blow mouldings.

15. Injected parison stretch blow mouldings produced according to the method of claim 14.

16. Method according to claim 11, in which the PET composition is being worked by extrusion blow-moulding or by extrusion to produce blown tubular films or foamed articles.

17. Blow mouldings produced according to the method of claim 16.

18. Tubular films produced according to the method of claim 16.

19. Foamed articles produced according to the method of claim 16.

20. Method according to one of claims 11 to 19, in which the PET resin is reacted with the copolymer of maleic anhydride and the optional additives directly in the extruder or in the blow moulding machine.